# EUROPEAN PATENT SPECIFICATION

(11) **EP 1 865 353 B1**
(45) Date of publication and mention of the grant of the patent: **27.02.2013**
(21) Application number: 06730358.6
(22) Date of filing: 29.03.2006
(51) Int. Cl.: G02B 21/06, G02B 21/00, G02B 21/36, G02B 21/16, G02B 21/14, G02B 26/08

(54) **DLP TYPE SLIT SCANNING MICROSCOPE**
SCHLITZRASTERMIKROSKOP DES DLP-TYPS
MICROSCOPE A BALAYAGE A FENTE DE TYPE DLP

(30) Priority: 29.03.2005 JP 2005094188
(43) Date of publication of application: 12.12.2007
(73) Proprietor: National University Corporation Hamamatsu University School of Medicine, Hamamatsu-shi Shizuoka 431-3192 (JP)
(72) Inventor: TERAKAWA, Susumu, Hamamatsu-shi, Shizuoka 431-3192 (JP); SAKURAI, Takashi, Hamamatsu-shi, Shizuoka 431-3192 (JP); WAKAZONO, Yoshihiko, Shizuoka, 4300807 (JP); YAMAMOTO, Seiji, Hamamatsu-shi, Shizuoka 431-3192 (JP)
(74) Representative: Viering, Jentschura & Partner
(86) International application number: PCT/JP2006/306410
(87) International publication number: WO 2006/104184

(56) References cited:
- EP-A1- 0 916 981
- EP-A1- 1 431 795
- WO-A1-03/025656
- JP-A- 09 159 922
- JP-A- 11 249 023
- JP-A- 2003 107 361
- JP-A- 2003 167 197
- JP-A- 2005 003 909
- JP-A- 2005 024 597
- US-A1- 2003 063 376

## Description

### Technical Field

The present invention relates to a DLP (Digital Light Processing) - type slit light scanning microscope that performs slit light illumination under DMD (Digital Micromirror Device) control.

### Background Art

A microscope which illuminates an oblique cross section and provides slit light illumination for observation of a part thereof when observing a sample, such as cells, is known. There are cases where the oblique cross section and the position thereof must be moved and observed for analysis depending on the specimen.
Conventional methods for realizing slit light illumination include a mask or the like which has a slit-like opening interposed intermediately in the optical path of the microscope.

In Patent Document 1, the present inventor has previously disclosed an extremely thin illumination generating device for realizing the extremely thin light for slit light illumination.
According to this disclosure, extremely thin illumination light which was not available by the conventional art can be generated. Making the illumination region extremely small and illuminating the slit light that does not reduce the intensity of illumination are very effective for observing cells, and images of cellular cross sections and slices.
The extremely thin illumination is realized by providing first and second slits and crossing the slit lights in the disclosure. Whenever one assumes to change the position, the width or the length of the slit, however, one must change the slit itself with satisfying the optical path conditions for slit light illumination.

Patent Document 2 discloses a microscope that scans with the illumination shaped as like a slit.
It is a confocal microscope which aims to increase the light using efficiency and reduce the imaging time. It obtains a cross section image by multi slit line scanning to a scanning object. An example of a galvanometer and digital micro mirror device used as multi slit scanning means is disclosed, and this digital micro mirror device is controlled so as to have the mirrors turned on at the locations corresponding to the slits of the multi slits.
Patent Document 2, however, discloses a microscope of the confocal type that differs from the slit light illumination method and also has a different optical system configuration. The optical system of slit light illumination is configured so as to diagonally illuminate a specimen with an extremely narrow slit light, in contrast to an optical system of the disclosure configured so as to form a confocal plane for the focus point of the specimen position.
Since the entire image is viewed by the multi line scaning, oblique cross section images of a specific narrow region of the cell can not be observed.

Patent Document 3 discloses a light irradiation switching method but refers partly to scan with slit-like illumination.
A structure for irradiating a light on a liquid sample diagonally by moving a mirror is disclosed in Fig. 4(b) of Patent Document 3.
This method of diagonal irradiation, however, is only a method by moving a mirror. A specific structure is not disclosed, for example, what kind of device is used, and what type of operation is done.
Patent Document 1: Japanese Laid-Open Patent Publication No. 2005-24597
Patent Document 2: Japanese Laid-Open Patent Publication No. 2003-167197
Patent Document 3: Japanese Patent No. 3,093,145 A further slit light scanning microscope is disclosed in JP 2005-003909.

### Disclosure of the Invention

Considering these problems, an object of the present invention is to provide a DLP-type slit light scanning microscope, by which slit light illumination by slit light irradiation under DMD control is realized, and it is possible to adjust easily the thickness of a slit for irradiating a specimen as well as the position and the range of the illumination light on the specimen

The above object is achieved by the features of claim 1 of the present invention.

According to the above configurations, slit light illumination can be realized and also the slit light illumination position can be changed under DMD control without mechanically moving the mask position of the slit. The incidence angle of the light entering the specimen is maintained at a fixed angle when the slit light illumination position is moved on the specimen. The range of the illumination light on the specimen can be changed by adjusting the number of micro mirrors which are controllably turned on in a slit shape by the DMD and arrayed in the lengthwise direction of the slit. The thickness of the slit light illuminating the specimen can be changed by adjusting the number of micro mirrors which are controllably turned on in a slit shape by the DMD and arrayed in the width direction of the slit. Moreover, the resolution can be increased and the brightness can be reduced by reducing the thickness of the slit light.
Since the slit light illumination is controlled by the DMD, the positioning and the like for the slit which should be illuminated can be accomplished by programmed control. And also the control becomes easy compared to a method for changing the mask of the microscope using a conventional slit light illumination method.

### Brief Description of the Drawings

Fig. 1 is a block diagram of an embodiment of the DLP-type slit light scanning microscope of the present invention.
Fig. 2 shows the details of a specimen which is illuminated with slit light.
Fig. 3 is a block diagram showing another embodiment of the DLP-type slit light scanning microscope of the present invention.
Fig. 4 is a block diagram of yet another embodiment of the DLP-type slit light scanning microscope of the present invention.
Fig. 5 shows an example of a pattern for ON controlled micro mirrors of the DMD in Fig. 4.
Fig. 6 shows a specific example of the lens group for light condensing in Fig. 4.

### Description of the Reference Numbers

- 1: laser light source;
- 2: concave lens;
- 3, 10, 20, 21: convex lens
- 4: DMD
- 5: dichroic mirror (DM)
- 6: back focal plane
- 7: ultra high numerical aperture objective lens
- 8: cover glass
- 9: specimen (cell)
- 11: CCD (observation means)

### Best Modes for Carrying Out the Invention

The embodiments of the present invention are described in detail hereinafter with reference to the figures.

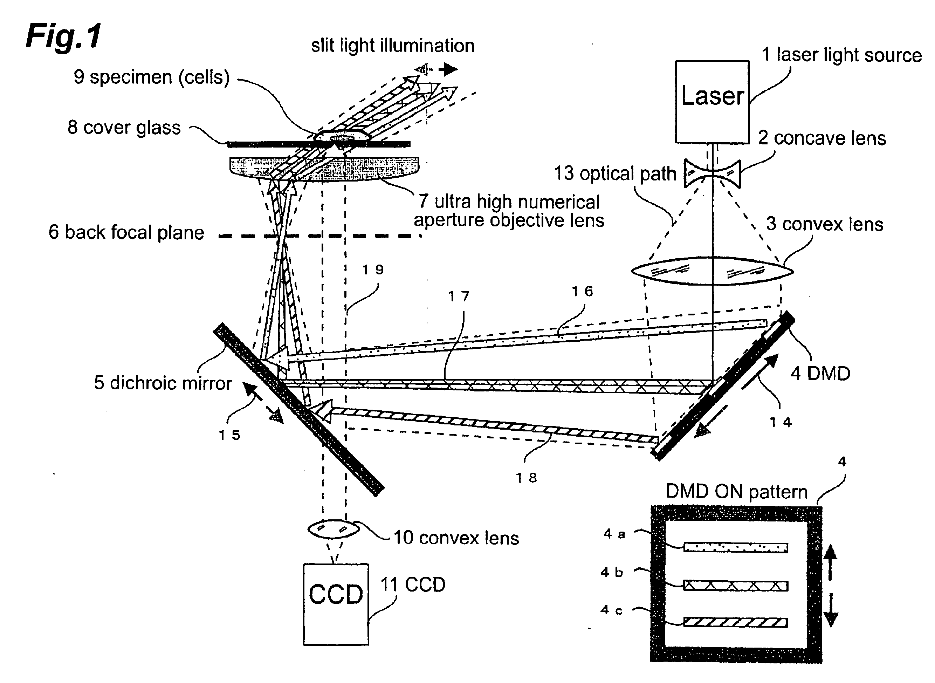

Fig. 1 is a block diagram showing an embodiment of the DLP-type slit light scanning microscope of the present invention.
The embodiment focuses on the optical system directly associated with the present invention and, therefore, other parts are omitted from the description.
A laser light source 1, concave lens 2, convex lens 3, DMD 4, dichroic mirror 5, ultra high numerical aperture objective lens 7, cover glass 8, specimen 9, convex lens 10, and CCD 11 configure the embodiment.

The laser light emitted from the laser light source 1 is diffused by the concave lens 2 and focused on the back focal plane of the ultra high numerical aperture objective lens 7 (numerical aperture is more than 1.33) by the convex lens 3. The light emitted from the convex lens 3 is reflected by a large number of micro mirrors which are controllably turned on by the DMD 4 in correspondence to a predetermined slit light illumination. The other micro mirrors which are controllably turned off reflect the light from the convex lens 3 to a light trap which is not shown in the figure.
The DMD 4 is ON/OFF controlled by a control circuit which is not shown in the figure, and the DMD 4 turns on the micro mirrors located on the part indicated by reference number 4a to obtain the slit light illumination. The slit light enters into the position of the specimen corresponding to the part of the micro mirrors indicated by 4a. When the micro mirrors at positions 4b and 4c forming slit shapes are turned on, the slit light is moved only to the corresponding positions and enters from the positions into the specimen. Although the micro mirrors which are turned on are changed, the incident angle on the cover glass 8 does not change. The optical path 13 is the optical path when the whole of the light reach the specimen without the ON/OFF control by the DMD.

The thickness of the slit light irradiating the specimen can be changed by adjusting the number of mirrors which are controllably turned on by the DMD 4 to form a slit shape and arrayed in the width direction of the slit shape. Further, the range of the slit light illumination can be changed by adjusting the number of micro mirrors which are controllably turned on and arrayed in the lengthwise direction of the slit shape.
After the slit shaped light emitted from the DMD 4 is reflected by the dichroic mirror 5 and focused once at the back focal plane of the ultra high numerical aperture objective lens 7, the light enters and is refracted by the ultra high numerical aperture objective lens 7. After that, the light enters the cover glass 8 from an inclined direction. The slit illumination light enters the specimen, that is a cell or the like, on the cover glass 8 from an inclined direction and an image for the oblique cross section can be observed. The oblique cross section image of the specimen irradiated by the slit illumination light is formed on the photoreceptor surface of the CCD 11 via the ultra high numerical aperture objective lens 7, dichroic mirror 5, and convex lens 10. The image of the specimen formed by the slit illumination light can be observed by a monitor or the like which is not shown in the figure.

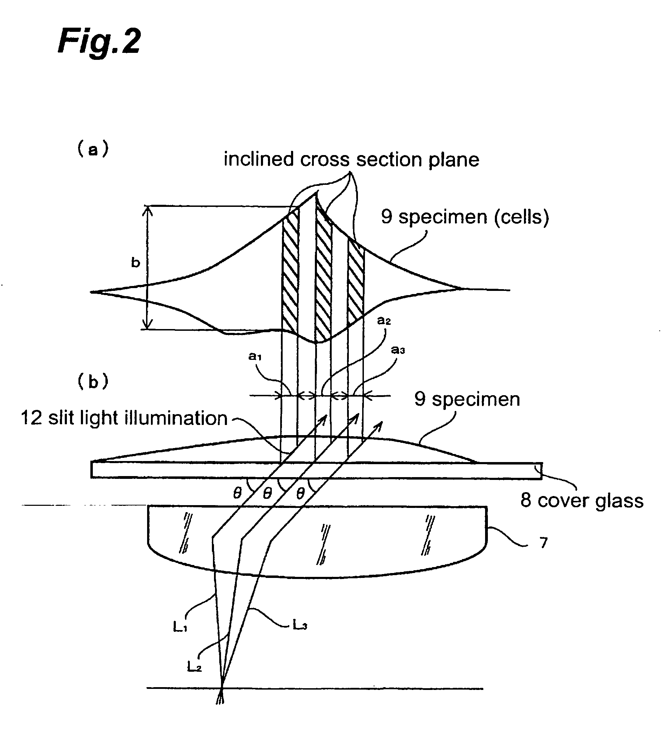

Fig. 2 shows the details of a specimen illuminated by a slit light; (a) is a top view of the specimen, and (b) is a side view of the ultra high numerical aperture objective lens, the cover glass and the specimen.
Slit light L₁ enters the cover glass 8 at an angle θ and irradiates a part of the specimen having a width a₁. Then, slit light L₂ can be obtained by changing the micro mirrors which are turned on by the DMD, and the slit light L₂ enters at the same angle θ to irradiate a part of width a₂ of the specimen. The similar thing can be said about slit light L₃ also. A large number of slit light irradiated positions can be obtained by changing the micro mirrors further. The thickness of the slit lights L₁, L₂, and L₃ can be adjusted by the number of micro mirrors which are controllably turned on in the slit shape and arrayed in the width direction of the slit shape, and in this way the brightness and the resolution of the slit illumination light can be changed also.
Furthermore, the range b of the slit light illumination can be changed by adjusting the number of micro mirrors which are controllably turned on and arrayed in the lengthwise direction of the slit shape. A condition in which the full size (range) of the specimen is illuminated is shown in Fig. 2 (a).
Fluorescent light may also be obtained by irradiating the slit light of a predetermined wavelength to a specimen containing fluorescent material. The obtained fluorescent light makes it possible to observe the image of the part irradiated by the slit light.

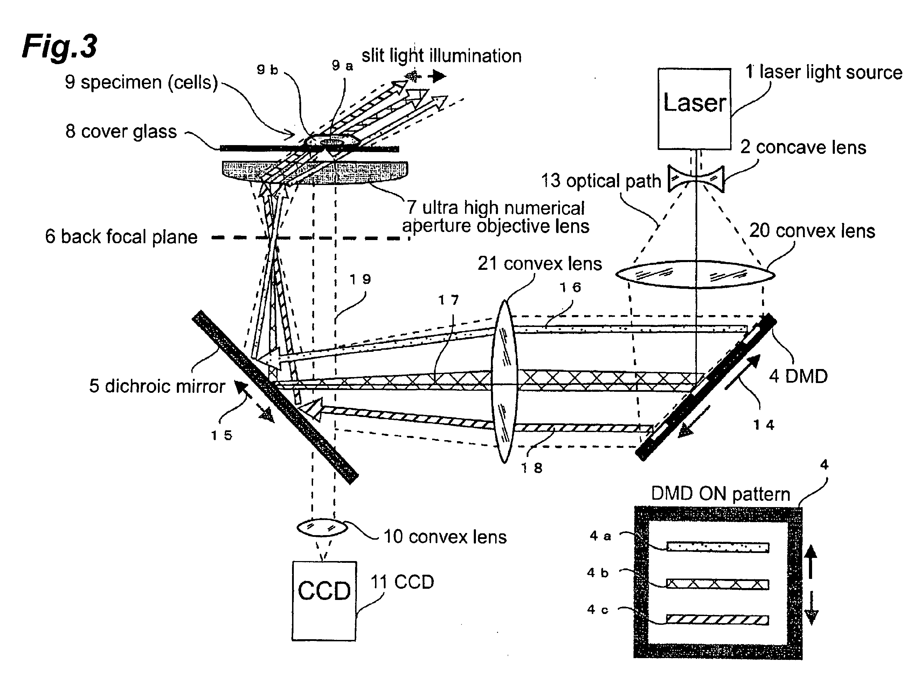

Fig. 3 is a block diagram showing another embodiment of the DLP-type slit light scanning microscope of the present invention.
This embodiment differs from Fig. 1 in the configuration of the second lens system, but is otherwise identical. Parts having the same functions as those of Fig. 1 are identified by the same reference numbers.
A convex lens 21 is disposed between the DMD 4 and the dichroic mirror 5, and a convex lens 20 is inserted between the DMD 4 and the concave lens 2. The diffused light from the concave lens 2 is rendered as parallel light by the convex lens 20 and enters the DMD 4. Then the parallel light from the DMD 4 is focused on the back focal plane of the ultra high numerical aperture objective lens 7 by the convex lens 21.
Since the light corresponding to the aperture of the convex lens 20 enters the DMD 4, the range of the slit light irradiation on the specimen can be larger than the embodiment shown in Fig. 1.

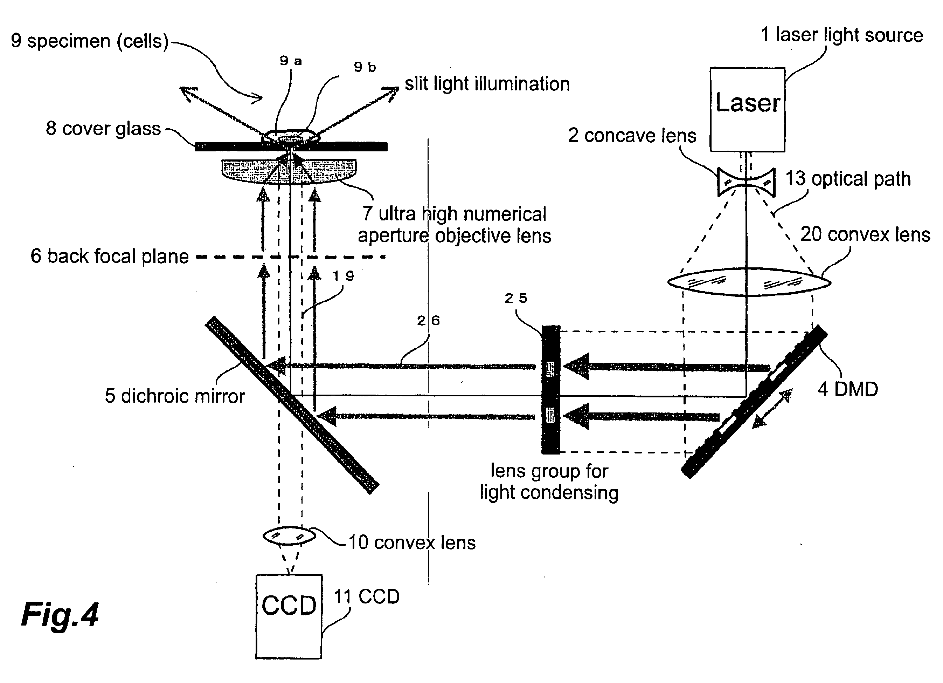

Fig. 4 is a block diagram showing still another embodiment of the DLP-type slit light scanning microscope of the present invention.
This embodiment replaces the convex lens 21 of Fig. 3 with a lens group for light condensing 25. Other structural elements are unchanged. The light emitted from the lens group for light condensing 25 forms an image on the back focal plane 6. The micro mirrors which are located at the intermediate part from the center to the periphery of the DMD 4 can be controlled to be turned on. When the center vicinity is turned on, epi-illumination occurs and the area outside of the predetermined range is subject to evanescent illumination. Ring-like slit light illumination, for example, is possible by turning on the micro mirrors between these areas, and the illumination can be easily switched to other illumination methods.

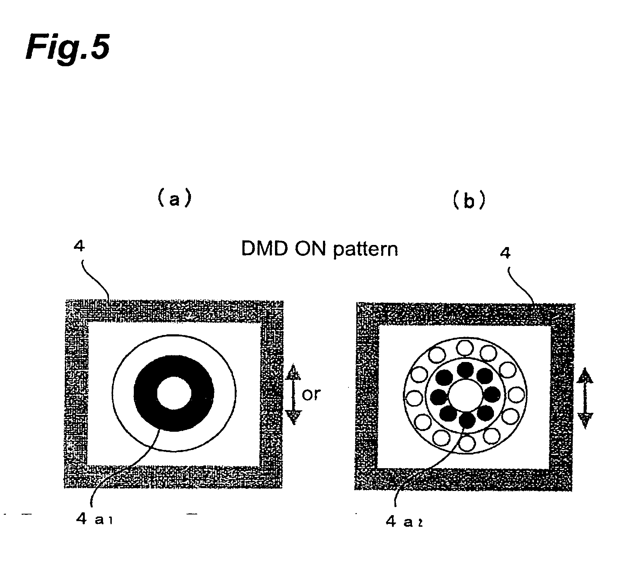

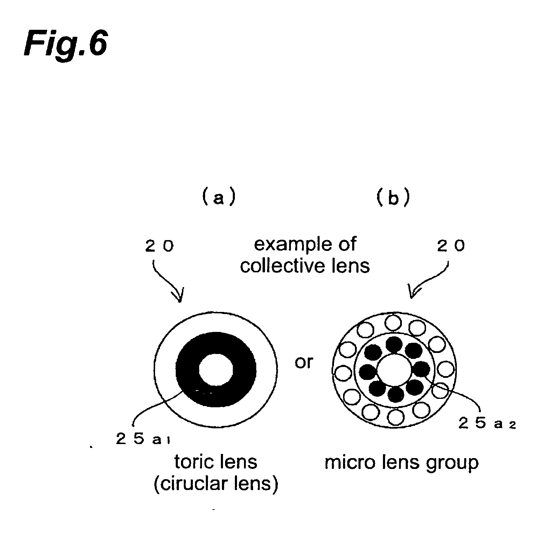

Fig. 5 shows an example of a pattern in which the micro mirrors of the DMD in Fig. 4 are turned on. Fig. 6 shows a specific example of the lens group for light condensing in Fig. 4.
When the lens group for light condensing is a toric lens (circular lens), the ring-like micro mirrors are turned on as shown in 4a₁ of Fig. 5(a) for slit light illumination. In the case of a micro lens group, the micro mirrors equivalent to the ring shaped micro lens are turned on as shown in 4a₂ of Fig. 4(b). When switching from slit light illumination to evanescent illumination, the ring shaped micro mirrors of the DMD at the outer side from the ring shaped micro mirrors 4a₁ or 4a₂ are turned on. The micro mirrors of the circular part of the center are turned on when switching to epi-illumination.
Reference number 25a₁ in Fig. 6 (a) shows an example of a toric lens corresponding to the DMD controlled as like Fig. 5 (a). Reference number 25a₂ in Fig. 6 (b) shows an example of a micro lens group corresponding to the DMD controlled as like Fig. 5 (b).
Therefore, ring-like slit light illumination is also possible, and the thickness of the slit light can be changed by adjusting the number of micro mirrors in the irradiation direction which are turned on by the DMD.

Although the concave lens and convex lens shown in each of the above embodiments have been described as examples of single element lenses, the lens groups may also be configured by a plurality of lens elements to perform diffusion and focusing.
Although cells were used as specimens in the examples, semitransparent bodies and liquids may also be objects.

### Industrial Applicability

The present invention is applicable to slit light illumination fluorescence microscopes used for observing cross section planes at a predetermined position of a specimen, such as cells and the like.

## Claims

1. A DLP-type slit light scanning microscope comprising:
a laser light source;
a first lens system for diffusing light from the laser light source;
a second lens system for focusing light flux diffused by the first lens system on a back focal plane of an objective lens system;
a DMD for receiving light from the second lens system and reflecting light by controllably turning ON/OFF a large number of micro mirrors;
a dichroic mirror for changing optical path of reflected light received from the DMD;
an objective lens system for receiving light from the dichroic mirror;
a cover glass disposed on a front side of the objective lens system;
a third lens system for forming an image of light from the specimen disposed on the cover glass, wherein the light has passed through the objective lens system and the dichroic mirror; and
observation means for observing an image of the specimen formed by the third lens system;
wherein the DMD is configured such that slit light is illuminated on the specimen, to provide an illumination with a given angle of incidence so that an oblique cross section can be observed, by controllably turning on the micro mirrors of the DMD in a slit shape, and slit light illumination position on the specimen is moved by horizontally changing the micro mirrors which have been controllably turned on in a slit shape such that the respective slit light intersects a same point on the back focal plane of the objective lens system to provide the illumination on the specimen at the same angle of incidence.

2. The DLP-type slit scanning microscope according to claim 1, wherein the second lens system disposes a convex lens between the DMD and the first lens system so as to focus light flux on the back focal plane of the objective lens system.

3. The DLP-type slit light scanning microscope according to claim 1, wherein the second lens system disposes a convex lens between the DMD and the first lens system so as to render parallel light and disposes a convex lens between the DMD and the dichroic mirror so as to focus light flux on the back focal plane of the objective lens system.

## Patentansprüche

1. Schlitzlicht-Rastermikroskop des DLP-Typs, aufweisend:
eine Laserlichtquelle;
ein erstes Linsensystem zum Streuen von Licht von der Laserlichtquelle;
ein zweites Linsensystem zum Fokussieren eines mittels des ersten Linsensystems gestreuten Lichtstroms auf einer hinteren Brennebene eines Objektiv-Linsensystems;
eine DMD zum Empfangen von Licht von dem zweiten Linsensystem und Reflektieren von Licht mittels kontrollierbaren EIN/AUS-Schaltens einer großen Anzahl von Mikrospiegeln;
ein dichroitischer Spiegel zum Ändern des Strahlengangs von von der DMD empfangenen reflektiertem Licht;
ein Objektiv-Linsensystem zum Empfangen von Licht von dem dichroitischen Spiegel;
ein auf einer Vorderseite des Objektiv-Linsensystems angeordnetes Deckglas;
ein drittes Linsensystem zum Bilden eines Bildes aus Licht von der auf dem Deckglas angeordneten Probe, wobei das Licht durch das Objektiv-Linsensystem und den dichroitischen Spiegel hindurchgetreten ist; und
Betrachtungsmittel zum Betrachten eines mittels des dritten Linsensystems gebildeten Bildes der Probe;
wobei die DMD derart konfiguriert ist, dass die Probe mittels kontrollierbaren Einschaltens der Mikrospiegel der DMD in einer Schlitzform mit Schlitzlicht beleuchtet wird, um eine Beleuchtung in einem bestimmten Einfallswinkel bereitzustellen, so dass ein schräger Querschnitt betrachtet werden kann, und eine Position der Schlitzlichtbeleuchtung auf der Probe mittels horizontalen Veränderns der Mikrospiegel, die kontrollierbar in einer Schlitzform eingeschaltet wurden, derart bewegt wird, dass das entsprechende Schlitzlicht denselben Punkt auf der hinteren Brennebene des Objektiv-Linsensystems schneidet, um die Probe unter demselben Einfallswinkel zu beleuchten.

2. Schlitzlicht-Rastermikroskop des DLP-Typs gemäß Anspruch 1, wobei in dem zweiten Linsensystem eine konvexe Linse zwischen der DMD und dem ersten Linsensystem angeordnet ist, so dass der Lichtstrom auf der hinteren Brennebene des Objektiv-Linsensystems fokussiert wird.

3. Schlitzlicht-Rastermikroskop des DLP-Typs gemäß Anspruch 1, wobei in dem zweiten Linsensystem eine konvexe Linse zwischen der DMD und dem ersten Linsensystem angeordnet ist, so dass paralleles Licht erzeugt wird, und eine konvexe Linse zwischen der DMD und dem dichroitischen Spiegel angeordnet ist, so dass der Lichtstrom auf der hinteren Brennebene des Objektiv-Linsensystems fokussiert wird.

## Revendications

1. Microscope à balayage de lumière par fente de type DLP comprenant :
une source de lumière laser ;
un premier système de lentilles pour diffuser la lumière en provenance de la source de lumière laser ;
un deuxième système de lentilles pour focaliser le flux de lumière diffusé par le premier système de lentilles sur un plan focal arrière d'un système de lentilles de focalisation ;
un DMD pour recevoir la lumière en provenance du deuxième système de lentilles et réfléchir la lumière en mettant en service ou hors service de manière pouvant être commandée un grand nombre de micromiroirs ;
un miroir dichroïque pour modifier le trajet optique de la lumière réfléchie reçue en provenance du DMD ;
un système de lentilles de focalisation pour recevoir la lumière en provenance du miroir dichroïque ;
un couvre-objet disposé sur une partie avant du système de lentilles de focalisation ;
un troisième système de lentilles pour former une image de la lumière en provenance de l'échantillon disposé sur le couvre-objet, dans lequel la lumière est passée à travers le système de lentilles de focalisation et le miroir dichroïque ; et
des moyens d'observation pour observer une image de l'échantillon formée par le troisième système de lentilles ;
dans lequel le DMD est configuré de telle sorte que la lumière par fente éclaire l'échantillon, pour fournir un éclairage avec un angle d'incidence donné de manière à pouvoir observer une section transversale oblique, en mettant en service de manière pouvant être commandée les micromiroirs du DMD en une forme de fente, et la position d'éclairage de la lumière par fente sur l'échantillon est déplacée en modifiant de manière horizontale les micromiroirs qui ont été mis en service de manière pouvant être commandée en une forme de fente de telle sorte que la lumière par fente respective coupe un même point sur le plan focal arrière du système de lentilles de focalisation afin de fournir l'éclairage sur l'échantillon selon le même angle d'incidence.

2. Microscope à balayage par fente de type DLP selon la revendication 1, dans lequel le deuxième système de lentilles dispose d'une lentille convexe située entre le DMD et le premier système de lentilles de façon à focaliser le flux de lumière sur le plan focal arrière du système de lentilles de focalisation.

3. Microscope à balayage de lumière par fente de type DLP selon la revendication 1, dans lequel le deuxième système de lentilles dispose d'une lentille convexe située entre le DMD et le premier système de lentilles de façon à rendre la lumière parallèle, et dispose d'une lentille convexe située entre le DMD et le miroir dichroïque de manière à focaliser le flux de lumière sur le plan focal arrière du système de lentilles de focalisation.
